Europäisches Patentamt

European Patent Office

Office européen des brevets

(19)

(11) Publication number: **0 094 810**
**B1**

(12) **EUROPEAN PATENT SPECIFICATION**

(45) Date of publication of patent specification: **24.08.88**

(51) Int. Cl.⁴: **C 03 C 13/00, C 03 C 23/00**

(21) Application number: **83302726.1**

(22) Date of filing: **13.05.83**

(54) Process for producing glass product having gradient of refractive index.

(30) Priority: **14.05.82 JP 80124/82**

(43) Date of publication of application:
**23.11.83 Bulletin 83/47**

(45) Publication of the grant of the patent:
**24.08.88 Bulletin 88/34**

(84) Designated Contracting States:
**DE FR GB**

(56) References cited:
**FR-A-2 227 234**
**JP-A-12 620 776**
**US-A-3 859 103**
**US-A-3 938 974**

**CHEMICAL ABSTRACTS, vol. 97, no. 10, 6th
September 1982, page 325, no. 77460k,
Columbus, Ohio, USA**

(73) Proprietor: **HOYA CORPORATION
13-12, 1-chome, Nishi-shinjuku
Shinjuku-ku Tokyo (JP)**

(72) Inventor: **Ohmi, Shigeaki
4-28-10, Nakaarai
Tokorozawa-shi Saitama (JP)**
Inventor: **Shingaki, Seiichi
472-4, Miyazawacho
Akishima-shi Tokyo (JP)**
Inventor: **Sakai, Hiroyuki
462-4, Miyazawacho
Akishima-shi Tokyo (JP)**
Inventor: **Asahara, Yoshiyuki
1101-34, Chuo 2-chome
Higashiyamato-shi Tokyo (JP)**

(74) Representative: **Diamond, Bryan Clive et al
Gee & Co. Chancery House Chancery Lane
London WC2A 1QU (GB)**

Courier Press, Leamington Spa, England.

## Description

The present invention relates to a process for producing a glass product having a gradient of refractive index which can be used as a material (preform) for optical transmission fibers or as a material for rod lenses.

A molecular stuffing method is known as a process for producing a glass product having a gradient of refractive index, in which a porous glass is used and its pores are filled with dopants (refractive index correction components).

Japanese Patent Application (OPI) No. 126207/76 (the term "OPI" as used herein refers to a published unexamined Japanese patent application) describes a process for producing a glass product having a gradient of refractive index by the molecular stuffing method, as well as a process for producing a porous glass. According to the process, a borosilicate glass is subjected to a heat treatment at a prescribed condition to separate it into an $SiO_2$-rich phase and an alkali metal oxide and $B_2O_3$-rich phase (phase separation). The glass is then treated with an aqueous solution containing an acid such as hydrochloric acid, sulfuric acid or nitric acid, to leach the alkali metal oxide and $B_2O_3$-rich acid-soluble phase, thereby forming a porous glass having continuous micropores which has the $SiO_2$-rich phase as a skeleton. After allowing a solution of dopants to permeate into the micropores present in the porous glass thus prepared (stuffing), a part of the dopants is leached out from the outside of the glass product (unstuffing) to form a gradient of dopant concentration. The dopants are then solidified in the pores and the glass product is dried and subjected to a heat treatment to collapse the micropores, thereby obtaining a glass product having a gradient of refractive index. Oxides, nitrates, carbonates, acetates, phosphates, borates, arsenates and silicates of alkali metals, alkaline earth metals, boron, aluminum, lead, phosphorus, and the like are described as the examples of dopant.

A transparent glass product having a gradient of refraction is used as rod microlenses for microlens arrays, pickup lenses for optical video or audio disks, and the like. Rod microlens used for rod microlens arrays of copying machines require to have a $\Delta n$ (difference of refractive index between central and peripheral portions of the lens) of only from about 0.007 to about 0.008. Therefore, the glass product obtained by the molecular stuffing method can sufficiently meet the requirement. However, lens arrays for facsimile and lens arrays for LED printers which are required to have a large numerical aperture and be bright must have a $\Delta n$ value exceeding 0.04 to 0.03, respectively. Therefore, a glass product satisfying this requirement cannot be obtained by merely utilizing the molecular stuffing method.

In order to increase the $\Delta n$ by the molecular stuffing method, the concentration of dopants in the stuffing solution must be increased or a dopant having a high refractive index must be used. However, the concentration of dopants in the stuffing solution cannot be increased infinitely due to the limit of their solubility. For example, $CsNO_3$, which is often used as a dopant, has a solubility at 100°C of at most 200 g/100 ml $H_2O$. Accordingly, even if a saturated solution of $CsNO_3$ is used as a stuffing solution, no significant effect can be expected to increase the $\Delta n$. In fact, Japanese Patent Application (OPI) No. 126207/76 has some examples which produce a glass product having a gradient of refractive index by stuffing a $CsNO_3$ aqueous solution containing 120 g of $CsNO_3$ per 100 ml of water at a temperature of 95°C and the maximum value for the $\Delta n$ is merely 0.031. A glass product having such a $\Delta n$ cannot be used as lens arrays for facsimile machines.

Regarding the use of dopants having a high refractive index, viz., dopants other than alkali metal compounds, even if those can be used for stuffing into the pores in a porous glass product, the dopants tend to react with the glass during heat treatment of the porous glass product, thereby making the glass product unstable. For example, $Pb(NO_3)_2$ is known as a dopant to increase the refractive index and has a solubility of about 130 g/100 ml $H_2O$ at 100°C. Even if this is used for the stuffing of a porous glass, the porous glass becomes unstable during the heat treatment and a transparent glass product is hardly obtained. Accordingly, when a dopant having a high refractive index is used, the amount used thereof must be limited to the range where a transparent glass product can be obtained. In the case of $Pb(NO_3)_2$, the concentration of the stuffing solution is at most about 40 g/100 ml $H_2O$ and even if the stuffing is conducted with such a concentration, the refractive index at the central portion of the resulting glass product is at best 1.465, as is described in Japanese Patent Application (OPI) No. 126207/76.

JP—A—8256432 (abstracted in Chem. Abstracts, Vol 97, No. 10, Sept 1982, p 325) discloses a process of making optical glass lenses, in which a porous gel made from an alkaline silicate solution is used as a preform and is permeated with, e.g., thallium nitrate, leached, e.g. with aqueous ethanol, to remove part of the dopant and form a concentration gradient, dried and sintered. The porous glass gel thus treated is very weak and tends to break during the drying and sintering; since the gel is prepared from an alkaline silicate solution, alkali is present in the preform and so its refractive index is increased and it is difficult to improve the $\Delta n$. Moreover in view of the variability in the composition and structure of the preform, the thallium treatment does not always prevent white turbidity in the glass. This disclosure does not therefore suggest that the use of thallium as dopant is useful.

FR—A—2,227,234 (US—A—3938974) discloses a process in which a sodium borosilicate glass rod is subjected to a heat treatment at 500° to 650°C to cause it to form a micro-structure composed of two phases which are respectively $SiO_2$-rich and $SiO_2$-poor, the glass is washed with a dilute mineral acid to remove the latter phase and leave a porous matrix, the latter is treated with a solution of a dopant such as a salt of thallium or lead which at least partially fills the pores and tends to increase the refractive index; a portion of the dopant can be selectively removed to obtain a radial gradient of refractive index in the rod. The percentage of dopant can be controlled by varying the concentration of the dopant solution, usually 3—5% by weight. The rod is then drawn to make optical fibres; there is no suggestion of its use to make other glass products including those suitable for making lenses.

We have found that a glass product having a large gradient of refractive index can be obtained by using thallium nitrate ($TlNO_3$) as a dopant for a phase-separated glass in the molecular stuffing method, due to high solubility in water.

It has also been found that the production of a white turbid, opaque glass product due to the use of thallium can be effectively prevented by the use of an alkali metal compound in combination with $TlNO_3$ even if a large amount of a thallium component is present in a glass product.

It has been further found that $TlNO_3$ can be used together with $Pb(NO_3)_2$ which is conventionally known as a dopant for increasing a refractive index.

Accordingly the present invention provides a process of producing a glass product having a gradient of refractive index, which comprises:

preparing an initial porous glass product by heat treatment to cause a phase separation into $SiO_2$-rich and $B_2O_3$-rich phases and treatment with a mineral acid;

permeating a solution of dopant into micropores of the porous glass product,

leaching out a part of the dopant from the micropores with or without solidifying the dopant in the micropores to form a concentration gradient of the dopant in the porous glass product,

solidifying the dopant in the micropores,

drying the porous glass product, and

heat-treating the porous glass product to collapse the micropores,

characterised in that the dopant comprises thallium nitrate optionally together with an alkali metal compound; and if the dopant is thallium nitrate alone it is in a concentration of no more than 80 g $TlNO_3$ per 100 ml of solvent.

$TlNO_3$ has an extremely high solubility in water. As a result, where $TlNO_3$ is used as a dopant, $TlNO_3$ can be stuffed in a porous glass product in a high concentration. However, where $TlNO_3$ is used alone as a dopant, if the solution having a high concentration of more than 80 g/100 ml $H_2O$ is stuffed, the glass becomes white turbid during the heat treatment and a transparent product cannot be be obtained. Therefore, in the case that $TlNO_3$ is used alone as a dopant, the amount (concentration) of $TlNO_3$ is 80 g/100 ml $H_2O$ or less, preferably 60 to 80 g/100 ml $H_2O$.

On the other hand, where $TlNO_3$ is used together with an alkali metal compound such as $CsNO_3$ as a dopant, even if $TlNO_3$ is stuffed in a high concentration, it is possible to effectively prevent the glass product from white turbid and opaque and a transparent glass product can be obtained. In the case that $TlNO_3$ is used together with an alkali metal compound, the amount of $TlNO_3$ is preferably 100 to 400 g/100 ml $H_2O$, and the amount of the alkali metal compound is 20 g/100 ml $H_2O$ or more, preferably 100 to 200 g/100 ml $H_2O$.

Further, where $TlNO_3$ is used together with $Pb(NO_3)_2$ and an alkali metal compound such as $CsNO_3$ as a dopant, it is also possible to effectively prevent the glass product from becoming white turbid and opaque, and a transparent glass product can be obtained. In the case when $TlNO_3$ is used together with $Pb(NO_3)_2$ and the alkali metal compound, the amount of $TlNO_3$ is preferably 100 to 400 g/100 ml $H_2O$, the amount of $Pb(NO_3)_2$ is 20 g/100 ml $H_2O$ or more, preferably 80 to 120 g/100 ml $H_2O$, and the amount of the alkali metal compound is 20 g/100 ml $H_2O$ or more, preferably 100 to 200 g/100 ml $H_2O$.

Further, examples of the alkali metal compound which can be used in combination with $TlNO_3$ in the present invention include nitrates and carbonates of sodium and potassium.

Examples of the solvent to dissolve the dopant used in the invention include water, an organic solvent such as methanol or ethanol, or a mixture of the organic solvent and water.

Any solvent which can be used as the solvent for the dopant can be used for the unstuffing.

The present invention is described in greater detail by reference to the following examples including comparative examples. Unless otherwise indicated, all percentages are by weight.

Examples

A glass composed of 54.50% $SiO_2$, 34.30% $B_2O_3$, 5.20% $Na_2O$ and 6.00% $K_2O$ was melted at 1,450°C for 3 hours while stirring it for about 1 hour during melting. The molten glass was cast into a mold, maintained at 580°C for 1 hour, and gradually cooled in a furnace to give a glass block. A glass rod having a diameter of 3 mm and a length of 60 mm was produced by cutting the block and was subjected to a heat treatment at a temperature of 540°C for 120 hours to cause a phase separation. The resulting phase-separated rod was treated in 1.5 N $H_2SO_4$ aqueous solution at 100°C for 12 to 24 hours to give a porous glass rod.

The porous glass rod was immersed in an aqueous solution containing 120 g of $CsNO_3$ and 200 g of $TlNO_3$ per 100 ml of water at 100°C for 24 hours to effect stuffing, and then immersed in an ethanol aqueous solution (40% by volume) at 70°C for 20 minutes to effect unstuffing. The thus treated rod was immersed in a methanol solution at 0°C for 2 hours to solidify the dopant in the micropores and dried in a dessiccator for 2 hours. Thereafter, the rod was maintained at 920°C for 6 hours and the micropores were collapsed to obtain a transparent glass product.

3

0 094 810

The above procedures were followed except that the type and amount of the dopant were changed as shown in the table below to obtain glass rods. The refractive index of each glass rod was measured. The results obtained are shown in the table below.

TABLE

| Example Nos. | Amount of dopant (in 100 ml of $H_2O$) | | | Refractive index | | Appearance |
|---|---|---|---|---|---|---|
| | $CsNO_3$ (g) | $Pb(NO_3)_2$ (g) | $TlNO_3$ (g) | Central portion | Peripheral portion | |
| Example 1 | 120 | — | 200 | 1.530 | 1.463 | Transparent |
| Example 2 | — | — | 80 | 1.496 | 1.463 | Transparent |
| Example 3 | — | — | 100 | 1.500 | 1.463 | White turbid |
| Example 4 | 120 | — | 100 | 1.512 | 1.463 | Transparent |
| Example 5 | 120 | 100 | 100 | 1.536 | 1.463 | Transparent |
| Example 6 | 200 | — | 100 | 1.524 | 1.463 | Transparent |
| Example 7 | 120 | — | 300 | 1.548 | 1.463 | Transparent |
| Example 8 | 200 | — | 400 | 1.569 | 1.463 | Transparent |
| Comparative Example 1 | 190 | — | — | 1.486 | 1.464 | Transparent |
| Comparative Example 2 | — | 70 | — | — | — | White turbid |
| Comparative Example 3 | — | 40 | — | 1.465 | — | Transparent |

**Claims**

1. A process of producing a glass product having a gradient of refractive index, which comprises:

preparing an initial porous glass product by heat treatment to cause a phase separation into $SiO_2$-rich and $B_2O_3$-rich phases and treatment with a mineral acid;

permeating a solution of dopant into micropores of the porous glass product,

leaching out a part of the dopant from the micropores with or without solidifying the dopant in the micropores to form a concentration gradient of the dopant in the porous glass product,

solidifying the dopant in the micropores,

drying the porous glass product, and

heat-treating the porous glass product to collapse the micropores,

characterised in that the dopant comprises thallium nitrate optionally together with an alkali metal compound; and if the dopant is thallium nitrate alone it is in a concentration of no more than 80 g $TlNO_3$ per 100 ml of solvent.

2. A process as claimed in Claim 1, wherein cesium nitrate is used as an alkali metal compound.

3. A process as claimed in Claim 1 or 2, wherein the dopant solution contains 100 to 400 grams of thallium nitrate and at least 20 grams of alkali metal compound, per 100 ml of solvent.

4. A process as claimed in Claim 1 or 2, wherein the dopant solution contains lead nitrate in addition to an alkali metal compound.

5. A process as claimed in Claim 4, wherein the dopant solution contains at least 20 grams of lead nitrate per 100 ml of solvent.

6. A process as claimed in any of the preceding claims, wherein the solvent for the dopant is water, an organic solvent or a mixture of water and organic solvent.

7. A process as claimed in any of the preceding claims, wherein the glass product is in the form of a rod.

4

**Patentansprüche**

1. Verfahren zur Herstellung eines Glasproduktes mit einem Gradienten des Brechungsindex umfassend:

Herstellen eines anfänglich porösen Glasproduktes durch Wärmebehandlung, wodurch eine Phasentrennung in eine SiO$_2$-reiche und B$_2$O$_3$-reiche Phase verursacht wird und Behandeln mit einer Mineralsäure;

Eindringenlassen einer Lösung eines Dotierungsmittels in die Mikroporen des porösen Glasproduktes;

Auslaugen eines Teils des Dotierungsmittels aus den Mikroporen mit oder ohne Verfestigung des Dotierungsmittels in den Mikroporen unter Ausbildung eines Konzentrationsgradienten des Dotierungsmittels in dem porösen Glasprodukt;

Verfestigen des Dotierungsmittels in den Mikroporen;

Trocknen des porösen Glasproduktes und

Wärmebehandlung des porösen Glasproduktes, wobei die Mikroporen zusammenfallen; dadurch gekennzeichnet, daß das Dotierungsmittel Thalliumnitrat, gegebenenfalls zusammen mit einer Alkalimetallverbindung umfaßt, und, wenn das Dotierungsmittel Thalliumnitrat allein ist, in einer Konzentration von nicht mehr als 80 g TlNO$_3$ pro 100 ml Lösungsmittel vorliegt.

2. Verfahren gemäß Anspruch 1, bei dem man Cäsiumnitrat als Alkalimetallverbindung verwendet.

3. Verfahren gemäß Anspruch 1 oder 2, bei dem die Dotierungslösung 100 bis 400 g Thalliumnitrat und wenigstens 20 g der Alkalimetallverbindung pro 100 ml Lösungsmittel enthält.

4. Verfahren gemäß Anspruch 1 oder 2, bei dem die Dotierungslösung Bleinitrat zusätzlich zu einer Alkalimetallverbindung enthält.

5. Verfahren gemäß Anspruch 4, bei dem die Dotierungslösung wenigstens 20 g Bleinitrat pro 100 ml Lösungsmittel enthält.

6. Verfahren gemäß einem der vorhergehenden Ansprüche, bei dem das Lösungsmittel für das Dotierungsmittel Wasser, ein organisches Lösungsmittel oder eine Mischung aus Wasser und einem organischen Lösungsmittel ist.

7. Verfahren gemäß einem der vorhergehenden Ansprüche, bei dem Glasprodukt in Form eines Stabes vorliegt.

**Revendications**

1. Un procédé de production d'un produit en verre ayant un gradient d'indice de réfraction, ledit procédé comprenant:

la préparation d'un produit en verre poreux initial par traitement thermique pour provoquer une séparation de phases en une phase riche en SiO$_2$ et en une phase riche en B$_2$O$_3$ et le traitement par un acide minéral;

L'infiltration d'une solution de dopant dans les micropores du produit en verre poreux,

la lexiviation d'une partie du dopant des micropores avec ou sans solidification du dopant dans les micropores pour former un gradient de concentration de dopant dans le produit en verre poreux,

la solidification du dopant dans les micropores,

le séchage du produit en verre poreux, et

le traitement thermique du produit en verre poreux pour provoquer l'effondrement des micropores, caractérisé en ce que le dopant comprend du nitrate de thallium éventuellement associé à un composé de métal alcalin, et lorsque le dopant est du nitrate de thallium seul, il est à une concentration ne dépassant pas 80 g de TlNO$_3$ pour 100 ml de solvant.

2. Un procédé selon la revendication 1 selon lequel le nitrate de césium est utilisé comme composé de métal alcalin.

3. Un procédé selon la revendication 1 ou 2 selon lequel la solution de dopant contient 100 à 400 g de nitrate de thallium et au moins 20 g de composé de métal alcalin pour 100 ml de solvant.

4. Un procédé selon la revendication 1 ou 2 selon lequel la solution de dopant contient du nitrate de plomb en plus du composé de métal alcalin.

5. Un procédé selon la revendication 4 selon lequel la solution de dopant contient au moins 20 g de nitrate de plomb pour 100 ml de solvant.

6. Un procédé selon l'une quelconque des revendications précédentes selon lequel le solvant pour le dopant est de l'eau, un solvant organique ou un mélange d'eau et d'un solvant organique.

7. Un procédé selon l'une quelconque des revendications précédentes selon lequel le produit en verre est sous la forme d'une tige.